# EUROPÄISCHE PATENTSCHRIFT

(11) **EP 4 374 751 B1**
(45) Veröffentlichungstag und Bekanntmachung des Hinweises auf die Patenterteilung: **30.07.2025**
(21) Anmeldenummer: 23206466.7
(22) Anmeldetag: 27.10.2023
(51) Int. Cl.: A47J 31/44

(54) **MILCHSCHÄUMER UND KAFFEEAUTOMAT**
MILK FROTHER AND AUTOMATIC COFFEE MACHINE
MOUSSEUR À LAIT ET AUTOMATE DE CAFÉ

(30) Priorität: 25.11.2022 DE 102022212626
(43) Veröffentlichungstag der Anmeldung: 29.05.2024
(73) Patentinhaber: BSH Hausgeräte GmbH, 81739 München (DE)
(72) Erfinder: Henz, Manuel, 83410 Laufen (DE); Einsiedler, Thomas, 83278 Traunstein (DE); Höglauer, Michael, 83236 Übersee (DE)

(56) Entgegenhaltungen:
- EP-A1- 2 695 558
- EP-B1- 3 039 999
- DE-B3- 102012 220 995
- US-A- 5 613 422
- MANIKANDAN N. ET AL: "Design of Shape Memory Alloy Spring Actuator for Pinch Valve Actuation", INTERNATIONAL JOURNAL OF ENGINEERING RESEARCH & TECHNOLOGY, 1 December 2013 (2013-12-01), pages 3089 - 3099, XP093135124, ISSN: 2278-0181, Retrieved from the Internet <URL:https://www.ijert.org/research/design-of-shape-memory-alloy-spring-actuator-for-pinch-valve-actuation-IJERTV2IS120956.pdf> [retrieved on 20240227]
- ANONYMOUS: "Shape-memory polymer", 19 September 2022 (2022-09-19), pages 1 - 13, XP093135159, Retrieved from the Internet <URL:https://en.wikipedia.org/w/index.php?title=Shape-memory_polymer&oldid=1111099958> [retrieved on 20240227]
- TENG JIANXIN ET AL: "Thermodynamic and shape memory properties of TPI/HDPE hybrid shape memory polymer", POLYMER TESTING, vol. 81, 1 January 2020 (2020-01-01), AMSTERDAM, NL, pages 106257, XP093135165, ISSN: 0142-9418, DOI: 10.1016/j.polymertesting.2019.106257

## Beschreibung

Die Erfindung betrifft einen Milchschäumer zum Aufschäumen von Milch für einen Kaffeeautomaten, mit einer Einstelleinrichtung, über die eine Einstellung eines dem Milchschäumer zuzuführenden Milchstroms möglich ist, sowie einen Kaffeeautomaten mit einem dementsprechenden Milchschäumer.

Ein Milchschäumer für einen Kaffeeautomaten ist z.B. aus der EP 2 695 558 A1 bekannt.

Gängige Kaffeeautomaten werden seit geraumer Zeit mit Milchschäumern ausgestattet, mittels welcher Milch zu Milchschaum aufgeschäumt werden kann. Das Aufschäumen der Milch im Milchschäumer erfolgt dabei typischerweise durch Vermengen eines Gemischs aus Luft, Milch und Wasserdampf, welcher zum Fördern des Gemischs aus Luft und Milch als Treibmedium einer Strahlpumpe des Milchschäumers verwendet wird. Der Wasserdampf dient dabei zugleich zum Erwärmen des Gemischs aus Luft und Milch auf eine Schaumtemperatur.

Die Vorteile von Kaffeeautomaten sind insbesondere die schnelle Zubereitung und die verschiedenen Einstellmöglichkeiten von Tasse zu Tasse hinsichtlich Kaffeeintensität und Temperatur. Ein weiterer Vorteil ist die automatische Erzeugung von Mixgetränken, sprich Kaffee mit warmer Milch bzw. Milchschaum, oder auch Milchschaum als separates Getränk. Hierzu muss lediglich ein zusätzlicher Behälter mit Milch bereitgestellt und an das System gekoppelt werden. Die Milch besitzt in der Regel keinen eigenen Heizkreislauf und wird daher über den im Kaffeeautomaten erzeugten Dampf erhitzt. Unter Zuschaltung eines Luftstroms wird Milchschaum erzeugt, sodass Getränke wie Cappuccino und Latte Macchiato per Knopfdruck erzeugt werden können. Die Konsistenz und Temperaturerhöhung, die der Milchschaum durch den Dampf erfährt, sind dabei durch vorgegebene Parameter meist vorbestimmt.

Nachteilig bei bekannten Milchschäumern ist es, dass die Temperatur des fertigen Milchschaums auch von der Temperatur der verwendeten Milch abhängt. Diese kann z.B. bei gerade aus dem Kühlschank genommener Milch von einer üblichen Kühlschranktemperatur bis zu einer üblichen Raumtemperatur bei schon lange aus dem Kühlschrank genommener Milch variieren. Dementsprechend variiert bei konstanter Temperaturerhöhung durch den Dampf die Schaumtemperatur respektive die Temperatur des fertigen Milchschaums im Extremfall um 20° C. Bisher kann dem nur durch erheblichen Erfassungs- und Einstellungsaufwand durch gesteuerte Ventile entgegnet werden, wie z.B. aus der EP 4 062 808 A2 bekannt. Besonders aufwändig ist es dabei, die Temperatur der verwendeten Milch, d.h. des zuzuführenden Milchstroms, zu erfassen.

Die Aufgabe der vorliegenden Erfindung ist es daher, einen verbesserten oder zumindest alternativen Milchschäumer bereitzustellen, der insbesondere die aus dem Stand der Technik bekannten Nachteile überwindet.

Dieses Problem wird erfindungsgemäß durch den Gegenstand der unabhängigen Ansprüche 1 und 10 gelöst. Bevorzugte Ausführungsformen sind Gegenstand der abhängigen Ansprüche.

Die vorliegende Erfindung beruht auf dem allgemeinen Gedanken, erstmals eine konstruktiv einfache und intuitiv zu bedienende Einstelleinrichtung anzugeben, die sich automatisch an die Temperatur der verwendeten Milch, d.h. des zuzuführenden Milchstroms, anpasst. Dadurch kann jeweils die benötigte Schaumtemperatur respektive die Temperatur des fertigen Milchschaums, oder auch Zieltemperatur, konstant erreicht werden, unabhängig davon wie lange die Milch schon aus dem Kühlschrank entnommen ist. Der erfindungsgemäße Milchschäumer bzw. Kaffeeautomat umfasst hierfür eine Einstelleinrichtung, über die eine Einstellung eines dem Milchschäumer zuzuführenden Milchstroms möglich ist, die sich dadurch auszeichnet, dass die Einstelleinrichtung mindestens ein temperaturabhängig die Form veränderndes Element umfasst. Damit wendet sich die Erfindung von dem Prinzip ab, die Temperatur separat als Messwert zu erfassen und ein elektronisch steuerbares Ventil entsprechend anzusteuern. Vielmehr kann durch das temperaturabhängig die Form verändernde Element direkt durch die Temperatur des zuzuführenden Milchstroms ein Einfluss auf eine Einstellung der Einstelleinrichtung genommen werden. So kann sich die Einstelleinrichtung selbst entsprechend einstellen, ohne dass diese eine aufwändige Erfassung und Regelung oder irgendeine Aktion einer Bedienperson erfordert, und dennoch kann eine konstante Schaumtemperatur erreicht werden. Ein Dampfstrom für die Erwärmung der Milch auf eine Zieltemperatur des fertigen Milchschaums kann z.B. auf eine verwendete Milch mit Zimmertemperatur ausgelegt werden. Bei einem Verwenden von Milch direkt aus dem Kühlschrank, d.h. mit einer deutlich niedrigeren Temperatur, kann das temperaturabhängig die Form verändernde Element die Einstellung der Einstelleinrichtung so beeinflussen, dass der dem Milchschäumer zuzuführende Milchstrom verringert wird. Bei unverändertem Dampfstrom steht demgemäß die gleiche Energiemenge aus dem Dampf für die Erhitzung einer vergleichsweise geringeren Milchmenge zur Verfügung. So kann die kältere Milch bei unverändertem Dampfstrom einen größeren Temperaturhub erfahren und die Temperatur des fertigen Milchschaums dadurch dennoch die Zieltemperatur erreichen.

Ein temperaturabhängig die Form veränderndes Element ist als solches für Anwendungen bei vergleichsweise hohen Temperaturen bekannt und kann z.B. mit einem Formgedächtnismaterial realisiert sein. Ein Formgedächtnismaterial kann beispielsweise eine Formgedächtnislegierung - auch Memorymetall genannt - oder ein Formgedächtnispolymer sein. Jedoch soll hier bei entsprechender Formgebung insbesondere auch eine temperaturänderungsbedingte Längenausdehung eines Bauteils als veränderte Form verstanden werden. Die Erfindung macht sich hier die Erkenntnis zu Nutze, dass bei entsprechender Formgebung ein Bauteil aus Metall und ein Bauteil aus einem Kunststoff wie etwa einem herkömmlichen PE oder PP, auch im Bereich einer üblichen Raumtemperatur und darunter, deutlich unterschiedliche Längenausdehnungen aufweisen können. Bei entsprechender Anordnung der beiden Bauteile, z.B. bei einer Einspannung eines PE-Balkens in einem Metall-Halter, kann die unterschiedliche Längenausdehung auch in dem genannten Temperaturbereich eine deutliche Formänderung ergeben. Diese temperaturabhängige Formänderung kann vorteilhaft dazu genutzt werden, um mittels der erfindungsgemäßen Einstelleinrichtung eine Einstellung des dem Milchschäumer zuzuführenden Milchstroms zu beeinflussen.

Bei einer vorteilhaften Weiterbildung der erfindungsgemäßen Lösung ist das temperaturabhängig die Form verändernde Element eingerichtet, seine Form reversibel zu ändern. Dadurch können die Vorteile der erfindungsgemäßen Lösung nicht nur mit Einweg-Produkten genutzt werden, sondern bevorzugt über die gesamte Lebensdauer eines langlebigen Milchschäumers bzw. Kaffeeautomaten.

Bei einer weiteren vorteilhaften Weiterbildung wird das temperaturabhängig die Form verändernde Element dadurch bereitgestellt, dass eine flexible Milchleitung benachbart zu zwei Bauteilen mit unterschiedlichem thermischen Längenausdehnungskoeffizienten angeordnet ist, insbesondere zwischen den zwei Bauteilen. Dadurch kann einerseits das temperaturabhängig die Form verändernde Element einfach an der flexiblen Milchleitung montiert werden und muss andererseits nicht direkt mit der Milch in Kontakt kommen. So kann das temperaturabhängig die Form verändernde Element auch Bestandteile aufweisen, die nicht spezifisch für einen Lebensmittelkontakt ausgewiesen sind. Unter einer flexiblen Milchleitung soll hier insbesondere eine Milchleitung mit einem flexiblen Abschnitt verstanden werden. Es kann die gesamte Milchleitung flexibel sein, oder auch nur ein Abschnitt im Bereich des temperaturabhängig die Form verändernden Elements.

Bei einer weiteren vorteilhaften Weiterbildung ist das temperaturabhängig die Form verändernde Element derart eingerichtet, dass es bei einer Temperatur des zuzuführenden Milchstroms von kleiner oder gleich 15°C einen Durchmesser der flexiblen Milchleitung, relativ zu einer Temperatur von größer oder gleich 25° C, reduziert. Dadurch wird erreicht, dass bereits bei verwendeter Milch mit einer Temperatur knapp aber deutlich unterhalb einer üblichen Raumtemperatur von z.B. 20° C bis 25° C der zuzuführende Milchstrom gedrosselt wird. Dadurch kann auch bei einem zuzuführenden Milchstrom mit weniger als 15° C bei unverändertem Dampfstrom die Zieltemperatur des fertigen Milchschaums ohne eine Temperaturmessung oder nutzerseitige Verstellung erreicht werden.

Unter einem Durchmesser der flexiblen Milchleitung soll hier insbesondere ein kleinster Abstand zwischen Innenwänden der flexiblen Milchleitung senkrecht zu einer Längserstreckungsrichtung der flexiblen Milchleitung angesehen werden. Vereinfacht ausgedrückt könnte dies als Innendurchmesser der flexiblen Milchleitung bezeichnet werden. Jedoch soll es als reduzierter Durchmesser hier insbesondere auch verstanden werden, wenn ein flexibler Schlauch z.B. aus einem Silikonmaterial zusammengedrückt wird, also sich durch eine äußere Einwirkung ein Strömungswiderstand der flexiblen Milchleitung erhöht. Wenn z.B. ein flexibler Schlauch fast komplett zusammengedrückt wird, so dass fast kein Fluid mehr durchströmen kann, ist genau genommen ein Abstand zwischen Wänden des Schlauchs in Druckrichtung am kleinsten und ein Abstand senkrecht zur Druckrichtung am größten. Dies soll hier jedoch insbesondere als eine Reduzierung des Begriffs Durchmesser verstanden werden.

Bei einer weiteren vorteilhaften Weiterbildung ist das temperaturabhängig die Form verändernde Element derart eingerichtet, dass es bei einer Temperatur des zuzuführenden Milchstroms von kleiner oder gleich 10° C einen Durchmesser der flexiblen Milchleitung stärker reduziert, als bei 15° C. Dadurch kann insbesondere in einem am häufigsten eintretenden Temperaturbereich des zuzuführenden Milchstroms mit kleiner oder gleich 10° C bei unverändertem Dampfstrom die Zieltemperatur des fertigen Milchschaums ohne eine Temperaturmessung oder nutzerseitige Verstellung erreicht werden.

Bei einer weiteren vorteilhaften Weiterbildung ist das temperaturabhängig die Form verändernde Element derart eingerichtet, dass es bei einer Temperatur des zuzuführenden Milchstroms von kleiner oder gleich 6° C einen Durchmesser der flexiblen Milchleitung stärker reduziert, als bei 10° C. Dadurch können die vorhergehend genannten Vorteile selbst dann erreicht werden, wenn nach dem Leerwerden eines schon lange bei hoher Raumtemperatur neben dem Kaffeeautomaten stehenden Milchbehälters neue Milch frisch aus einem sehr kalt eingestellten Kühlschrank verwendet wird. Da auch hierfür keine nutzerseitige Verstellung nötig ist, wird auch ein besonders intuitives Handling ermöglicht.

Bei einer weiteren vorteilhaften Weiterbildung umfasst das temperaturabhängig die Form verändernde Element einen Halter und einen Gegenhalter, die auf eine flexible Milchleitung einwirken. Dadurch kann nicht nur eine besonders einfache und wirksame temperaturabhängige Formänderung erreicht werden, sondern auch ein einfacher Aufbau und ermöglicht und gleichzeitig eine einfache Reinigung aller Komponenten ermöglicht.

Bei einer weiteren vorteilhaften Weiterbildung umfasst der Gegenhalter ein Material mit einem höheren thermischen Längenausdehnungskoeffizienten, als der Halter. Dadurch wird ermöglicht, den Gegenhalter einfach in den Halter zu montieren und dabei auch die flexible Milchleitung im Einflussbereich der temperaturabhängigen Formänderung zu fixieren.

Bei einer weiteren vorteilhaften Weiterbildung umfasst der Gegenhalter ein Kunststoffmaterial, insbesondere ein PP oder ein PE, und umfasst der Halter ein Metallteil oder ein verstärktes Kunststoffmaterial. Dadurch wird eine besonders kostengünstige Möglichkeit bereitgestellt, die temperaturabhängige Formänderung für die Einstellung der Einstelleinrichtung zu erzielen - und in der Variante mit Metallteil durch nur sehr geringfügig höhere Kosten eine gleichzeitig optisch und haptisch sehr ansprechende Möglichkeit bereitgestellt.

Die eingangs genannte Aufgabe wird besonders vorteilhaft durch einen Kaffeeautomaten mit einem Milchschäumer und einer Einstelleinrichtung gelöst, die mindestens ein temperaturabhängig die Form veränderndes Element umfasst. Denn hierbei kann neben den oben genannten Vorteilen die Einstelleinrichtung zusätzlich auch dazu genutzt werden, die flexible Milchleitung am Kaffeeautomaten festzulegen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Es zeigen, jeweils schematisch,
- Fig. 1: einen erfindungsgemäßen Milchschäumer mit Einstelleinrichtung in einem erfindungsgemäßen Kaffeeautomaten,
- Fig. 2a: eine schematische Schnittdarstellung durch die erfindungsgemäße Einstelleinrichtung bei einer Temperatur des zuzuführenden Milchstroms von 25° C, und
- Fig. 2b: eine Darstellung wie in Fig. 2a, jedoch bei einer Temperatur des zuzuführenden Milchstroms von 10° C.

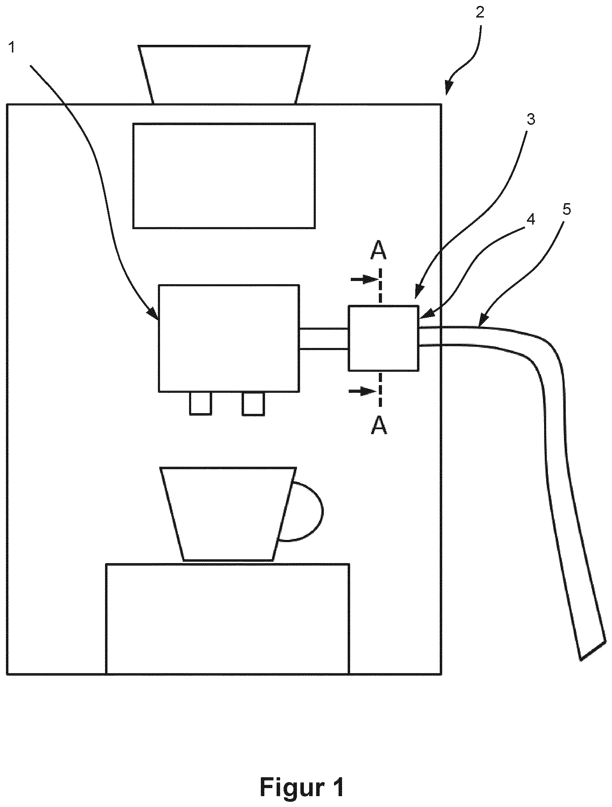

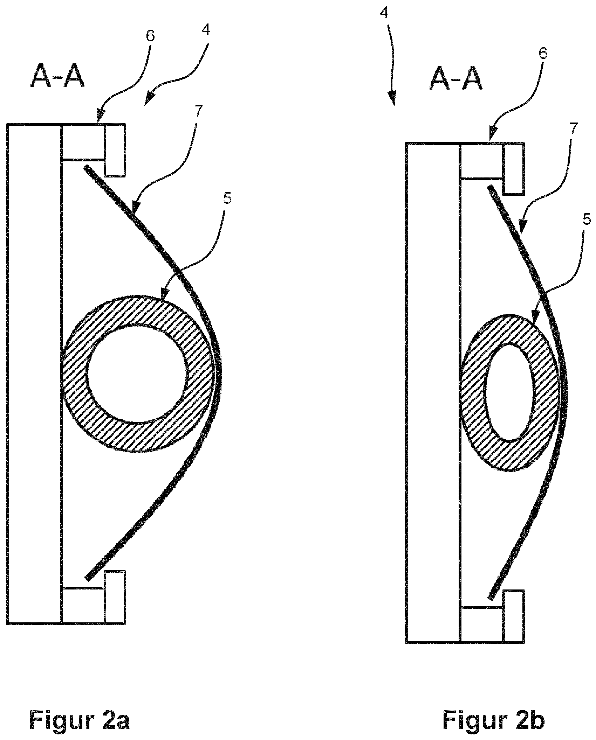

Entsprechend der Figur 1, weist der Milchschäumer 1, der in einen Kaffeeautomaten 2 eingebaut ist, eine Einstelleinrichtung 3 auf. In Figur 1 ist die Einstelleinrichtung zur besseren Übersicht beabstandet zum Milchschäumer 1 dargestellt, sie kann aber auch direkt am Milchschäumer 1 angeordnet sein. Über die Einstelleinrichtung 3 ist eine Einstellung eines dem Milchschäumer 1 zuzuführenden Milchstroms möglich. Hierfür weist die Einstelleinrichtung das in Figur 2a und Figur 2b schematisch im Teilschnitt dargestellte temperaturabhängig die Form verändernde Element 4 auf. Das temperaturabhängig die Form verändernde Element 4 umfasst einen Halter 6 aus Metall und einen Gegenhalter 7 aus PE, die auf eine flexible Milchleitung 5 einwirken. Die flexible Milchleitung 5 ist im vorliegenden Beispiel durch einen Silikonschlauch gebildet. Der Halter 6 aus Metall ist im vorliegenden Beispiel aus fünf einzelnen Halbzeugen zu einer Art Schiene zusammengesetzt, kann aber beispielsweise aus einem Blechteil gebogen sein oder im Profilguss hergestellt sein. Er kann z.B. auch im Spritzgussverfahren aus faserverstärktem Kunststoff hergestellt sein oder mittels anderer bekannter Verfahren. Der Gegenhalter 7 ist im vorliegenden Beispiel als einfacher Streifen aus einem PE Material gebildet, mit dem die flexible Milchleitung 5 im Halter 6 fixiert wird.

In Figur 2a ist dargestellt, dass der Halter 6 und der Gegenhalter 7 bei einer Temperatur des zuzuführenden Milchstroms von 25° C zwar auf die flexible Milchleitung 5 einwirken, deren Innendurchmesser jedoch unverändert ist und sozusagen dem Rohzustand der flexible Milchleitung 5 entspricht. Der Gehälter 7 ist als gerader streifenförmiger Balken aus PE Material hergestellt und bei der Montage in den Halter 6 gegen die flexible Milchleitung 5 drückend eingespannt. Dadurch wird er verbogen und übt eine Kraft auf die flexible Milchleitung 5 aus, die hier jedoch noch nicht ausreicht um die flexible Milchleitung 5 zu verformen. Für eine Zieltemperatur des fertigen Milchschaums von 65° C bis 68° C ist ein Temperaturhub von 40° C bis 43° C nötig. Ein dem Milchschäumer 1 zugeführter Dampfstrom ist so ausgelegt, dass durch eine nicht dargestellte Strahlpumpe im Milchschäumer 1 die Milch als ein dem Milchschäumer 1 zuzuführender Milchstrom über die flexible Milchleitung 5 angesaugt wird, aus einem nicht dargestellten Milchbehälter. Der dem Milchschäumer 1 zuzuführender Milchstrom wird dabei durch den Innendurchmesser der flexiblen Milchleitung 5 begrenzt. Der dem Milchschäumer 1 zugeführte Dampfstrom ist zudem so ausgelegt, dass die angesaugte 25° C warme Milch einen Temperaturhub von 40° C bis 43° C erfährt. Dadurch wird die die Zieltemperatur des fertigen Milchschaums von 65° C bis 68° C erreicht.

In Figur 2b ist dargestellt, dass der Halter 6 und der Gegenhalter 7 bei einer Temperatur des zuzuführenden Milchstroms von 10° C derart auf die flexible Milchleitung 5 einwirken, dass deren Innendurchmesser in Druckrichtung reduziert ist. Dies wird dadurch erreicht, dass die geringere Temperatur des zuzuführenden Milchstroms beim Gegenhalter 7 aus PE durch dessen höheren thermischen Längenausdehnungskoeffizienten und die Fig. 2 a und b entsprechende Formgebung und Einbaulage eine deutlich stärker reduzierte

Längserstreckung (in Fig. 2a und 2b im Wesentlichen von oben nach unten) bewirkt, als beim Halter 6 aus Metall. Mit anderen Worten zieht sich der Gegenhalter 7 in Längsrichtung stärker zusammen als der Halter 6. Durch die Einspannung des Gegenhalters 7 im Halter 6 ändert sich daher auch die Form und erhöht sich die Kraft, die auf die flexible Milchleitung 5 wirkt. Dadurch wird gegenüber der Temperatur im Beispiel gemäß Figur 2a die Form des temperaturabhängig die Form veränderndes Element 4 so verändert, dass eine Einstellung, hier eine Reduzierung, des dem Milchschäumer 1 zuzuführenden Milchstroms erfolgt. Folglich erfährt der zugeführte Milchstrom durch den gleichbleibenden Dampfstrom im Verhältnis einen größeren Temperaturhub, sodass wiederum eine Zieltemperatur des fertigen Milchschaums von 65° C bis 68° C erreicht werden kann, ohne dass eine Temperaturmessung oder nutzerseitige Verstellung dafür nötig ist.

Wie in Figur 1 erkennbar, dient die Einstelleinrichtung 3 beim Kaffeeautomaten 2 zusätzlich auch dazu, die flexible Milchleitung 5 am Kaffeeautomaten 2 festzulegen. Hierdurch kann, neben den bereits genannten Vorteilen, zusätzlich auch ein Herstellungsaufwand verringert werden.

Mit dem erfindungsgemäßen Milchschäumer 1 bzw. dem erfindungsgemäßen Kaffeeautomaten 2 ist es erstmals mit geringem Aufwand bei intuitiver Bedienung möglich, eine gleichbleibende Schaumtemperatur respektive Temperatur des fertigen Milchschaums unabhängig von der Temperatur der verwendeten Milch, d.h. des zuzuführenden Milchstroms zu erreichen.

### Bezugszeichenliste

- 1: Milchschäumer
- 2: Kaffeeautomat
- 3: Einstelleinrichtung
- 4: temperaturabhängig die Form veränderndes Element
- 5: flexible Milchleitung
- 6: Halter
- 7: Gegenhalter

## Patentansprüche

1. Milchschäumer (1) zum Aufschäumen von Milch für einen Kaffeeautomaten (2), mit einer Einstelleinrichtung (3), über die eine Einstellung eines dem Milchschäumer (1) zuzuführenden Milchstroms möglich ist, **dadurch gekennzeichnet, dass** die Einstelleinrichtung (3) mindestens ein temperaturabhängig die Form veränderndes Element (4) umfasst.

2. Milchschäumer nach Anspruch 1, **dadurch gekennzeichnet, dass** das temperaturabhängig die Form verändernde Element (4) eingerichtet ist, seine Form reversibel zu ändern.

3. Milchschäumer nach Anspruch 1 oder 2, **dadurch gekennzeichnet, dass** das temperaturabhängig die Form verändernde Element (4) dadurch bereitgestellt wird, dass eine flexible Milchleitung (5) benachbart zu zwei Bauteilen mit unterschiedlichem thermischen Längenausdehnungskoeffizienten angeordnet ist, insbesondere zwischen den zwei Bauteilen.

4. Milchschäumer nach einem der Ansprüche 1 bis 3, **dadurch gekennzeichnet, dass** das temperaturabhängig die Form verändernde Element (4) derart eingerichtet ist, dass es bei einer Temperatur des zuzuführenden Milchstroms von kleiner oder gleich 15° C einen Durchmesser der flexiblen Milchleitung (5), relativ zu einer Temperatur von größer oder gleich 25° C, reduziert.

5. Milchschäumer nach einem der Ansprüche 1 bis 4, **dadurch gekennzeichnet, dass** das temperaturabhängig die Form verändernde Element (4) derart eingerichtet ist, dass es bei einer Temperatur des zuzuführenden Milchstroms von kleiner oder gleich 10° C einen Durchmesser der flexiblen Milchleitung (5) stärker reduziert, als bei 15° C.

6. Milchschäumer nach einem der Ansprüche 1 bis 5, **dadurch gekennzeichnet, dass** das temperaturabhängig die Form verändernde Element (4) derart eingerichtet ist, dass es bei einer Temperatur des zuzuführenden Milchstroms von kleiner oder gleich 6° C einen Durchmesser der flexiblen Milchleitung (5) stärker reduziert, als bei 10° C.

7. Milchschäumer nach einem der vorhergehenden Ansprüche, **dadurch gekennzeichnet, dass** das temperaturabhängig die Form verändernde Element (4) einen Halter (6) und einen Gegenhalter (7) umfasst, die auf eine flexible Milchleitung (5) einwirken.

8. Milchschäumer nach Anspruch 7, **dadurch gekennzeichnet, dass** der Gegenhalter (7) ein Material mit einem höheren thermischen Längenausdehnungskoeffizienten umfasst, als der Halter (6).

9. Milchschäumer nach Anspruch 8, **dadurch gekennzeichnet, dass** der Gegenhalter (7) ein Kunststoffmaterial umfasst, insbesondere ein PP oder ein PE, und dass der Halter (6) ein Metallteil oder ein verstärktes Kunststoffmaterial umfasst.

10. Kaffeeautomat (2), mit einem Milchschäumer (1) und einer Einstelleinrichtung (3) nach einem der vorhergehenden Ansprüche.

## Claims

1. Milk frother (1) for frothing milk for an automatic coffee machine (2), having an adjustment device (3), by way of which it is possible to adjust a milk stream to be supplied to the milk frother (1), **characterised in that** the adjustment device (3) comprises at least one element (4) which changes shape depending on temperature.

2. Milk frother according to claim 1, **characterised in that** the element (4) which changes shape depending on temperature is designed to reversibly change its shape.

3. Milk frother according to claim 1 or 2, **characterised in that** the element (4) which changes shape depending on temperature is provided so that a flexible milk line (5) is arranged adjacent to two components with different thermal coefficients of linear expansion, in particular between the two components.

4. Milk frother according to one of claims 1 to 3, **characterised in that** the element (4) which changes shape depending on temperature is designed such that at a temperature of the milk stream to be supplied of less than or equal to 15°C, it reduces a diameter of the flexible milk line (5) relative to a temperature of greater than or equal to 25°C.

5. Milk frother according to one of claims 1 to 4, **characterised in that** the element (4) which changes shape depending on temperature is designed so that at a temperature of the milk stream to be supplied of less than or equal to 10°C, it reduces a diameter of the flexible milk line (5) more significantly than at 15°C.

6. Milk frother according to one of claims 1 to 5, **characterised in that** the element (4) which changes shape depending on temperature is designed so that at a temperature of the milk stream to be supplied of less than or equal to 6°C, it reduces a diameter of the flexible milk line (5) more significantly than at 10°C.

7. Milk frother according to one of the preceding claims, **characterised in that** the element (4) which changes shape depending on temperature comprises a support (6) and a counter support (7), which act on a flexible milk line (5).

8. Milk frother according to claim 7, **characterised in that** the counter support (7) comprises a material with a higher thermal coefficient of linear expansion than the support (6).

9. Milk frother according to claim 8, **characterised in that** the counter support (7) comprises a plastic material, in particular a PP or a PE, and the support (6) comprises a metal part or a reinforced plastic material.

10. Automatic coffee machine (2), having a milk frother (1) and an adjustment device (3) according to one of the preceding claims.

## Revendications

1. Mousseur à lait (1) pour le moussage de lait d'une machine à café (2), comprenant un dispositif de réglage (3), par le biais duquel un réglage d'un flux de lait à fournir au mousseur à lait (1) est possible, **caractérisé en ce que** le dispositif de réglage (3) comprend au moins un élément modifiant la forme en fonction de la température (4).

2. Mousseur à lait selon la revendication 1, **caractérisé en ce que** l'élément modifiant la forme en fonction de la température (4) est configuré pour modifier sa forme de manière réversible.

3. Mousseur à lait selon la revendication 1 ou 2, **caractérisé en ce que** l'élément modifiant la forme en fonction de la température (4) est procuré **en ce qu'**un tuyau de lait (5) flexible avoisine deux modules ayant un coefficient de dilatation thermique longitudinale différent, en particulier entre les deux modules.

4. Mousseur à lait selon l'une des revendications 1 à 3, **caractérisé en ce que** l'élément modifiant la forme en fonction de la température (4) est configuré de sorte que, à une température du flux de lait à fournir égale ou inférieure à 15°C, il diminue le diamètre du tuyau de lait (5) flexible par rapport à celui constaté à une température égale ou supérieure à 25°C.

5. Mousseur à lait selon l'une des revendications 1 à 4, **caractérisé en ce que** l'élément modifiant la forme en fonction de la température (4) est configuré de sorte que, à une température du flux de lait à fournir égale ou inférieure à 10°C, il diminue encore plus le diamètre du tuyau de lait (5) flexible que lorsqu'elle est de 15°C.

6. Mousseur à lait selon l'une des revendications 1 à 5, **caractérisé en ce que** l'élément modifiant la forme en fonction de la température (4) est configuré de sorte que, à une température du flux de lait à fournir égale ou inférieure à 6°C, il diminue encore plus le diamètre du tuyau de lait (5) flexible que lorsqu'elle est de 10°C.

7. Mousseur à lait selon l'une des revendications précédentes, **caractérisé en ce que** l'élément modifiant la forme en fonction de la température (4) comprend un appui (6) et un contre-appui (7) qui agissent sur un tuyau de lait (5) flexible.

8. Mousseur à lait selon la revendication 7, **caractérisé en ce que** le contre-appui (7) comprend une matière présentant un coefficient de dilatation thermique longitudinale plus élevé que l'appui (6).

9. Mousseur à lait selon la revendication 8, **caractérisé en ce que** le contre-appui (7) comprend une matière synthétique en particulier un PP ou un PE et **en ce que** l'appui comprend une pièce métallique ou une matière synthétique renforcée.

10. Machine à café (2) comprenant un mousseur à lait (1) et un dispositif de réglage (3) selon l'une des revendications précédentes.
